# EUROPEAN PATENT APPLICATION

(11) **EP 4 797 285 A1**
(43) Date of publication of application: **26.08.2026**
(21) Application number: 26152949.9
(22) Date of filing: 20.01.2026
(51) Int. Cl.: G21C 19/14, B09B 3/35, G21D 1/00

(54) **METHOD FOR DISMANTLING CALANDRIA VESSEL UNDERWATER AND APPARATUS OF DISMANTLING THE SAME**

(30) Priority: 20.02.2025 KR 20250022260
(71) Applicant: Doosan Enerbility Co., Ltd., Seongsan-gu Changwon-si, Gyeongsangnam-do 51711 (KR); Korea Hydro & Nuclear Power Co., Ltd, Gyeongju-si, Gyeongsangbuk-do 38120 (KR)
(72) Inventor: Park, Kwang Soo, 02225 Seoul (KR); Pak, Dong Hun, 44617 Ulsan (KR); Kim, Chang Kyu, 51471 Changwon-si, Gyeongsangnam-do (KR); Kim, Hae Woong, 51319 Changwon-si, Gyeongsangnam-do (KR); Lim, Chung Sik, 51431 Changwon-si, Gyeongsangnam-do (KR); Lim, Tae Seob, 06912 Seoul (KR); Kim, Min Chul, 34101 Daejeon (KR); Na, Young Il, 34101 Daejeon (KR); Ryu, Gang Woo, 34101 Daejeon (KR)
(74) Representative: BCKIP Part mbB

(57) **Abstract**

A method for dismantling a calandria vessel (200) underwater is provided. The method for dismantling the calandria vessel underwater includes filling an inside of a concrete vault (100) in which a calandria vessel is installed with water; installing a manipulator (400) in the concrete vault; opening the concrete vault by dismantling an RM-deck (10) (reactivity-mechanism deck); dismantling an upper portion to cut and dismantle an upper portion of the calandria vessel and a fuel tube (300) disposed inside the upper portion of the calandria vessel using the manipulator; and dismantling a lower portion to cut and dismantle a lower portion of the calandria vessel and a fuel tube disposed inside the lower portion of the calandria vessel using the manipulator.

## Description

This application claims priority to Korea Patent Application No. 10-2025-0022260, filed February 20, 2025.

### FIELD

Apparatuses and methods consistent with exemplary embodiments relate to a method for dismantling a calandria vessel underwater and an apparatus for dismantling the same, and more particularly, to a method and apparatus for dismantling a calandria vessel underwater capable of safely dismantling the calandria vessel and a fuel tube in an underwater environment using various types of devices detachably mounted in a manipulator installed in a concrete vault, thereby reducing radiation exposure to workers.

### BACKGROUND

A heavy-water reactor facility used in nuclear power generation includes a calandria, a calandria vault configured to accommodate the calandria, and components located inside and outside the calandria. Conventionally, there have been cases of replacing components located inside and outside the calandria, but there have been no cases of dismantling the entire heavy-water reactor facility, including the calandria.

When dismantling a reactor in the heavy water reactor facility, exposure to radiation occurs due to the dismantling work. Therefore, it is necessary to reduce radiation exposure and minimize or prevent contamination from spread of radioactive materials. However, currently, there are no adequate or effective measures in place for the stable and effective dismantling of heavy-water reactor type nuclear power plants.

### SUMMARY

Aspects of one or more exemplary embodiments provide a method for dismantling a calandria vessel underwater and an apparatus for dismantling the same capable of safely dismantling the calandria vessel and fuel tube in the underwater environment using various devices detachably mounted in the manipulator installed in the concrete vault, thereby reducing radiation exposure to workers.

Additional aspects will be set forth in part in the description which follows and, in part, will become apparent from the description, or may be learned by practice of the exemplary embodiments.

According to an aspect of an exemplary embodiment, there is provided a method for dismantling a calandria vessel underwater including: filling an inside of a concrete vault in which a calandria vessel is installed with water; installing a manipulator in the concrete vault; opening the concrete vault by dismantling an RM-deck (reactivity-mechanism deck); dismantling an upper portion to cut and dismantle an upper portion of the calandria vessel and a fuel tube disposed inside the upper portion of the calandria vessel using the manipulator; and dismantling a lower portion to cut and dismantle a lower portion of the calandria vessel and a fuel tube disposed inside the lower portion of the calandria vessel using the manipulator.

The dismantling the upper portion may include: dismantling a first vessel of cutting at least one portion of the upper portion of the calandria vessel using a first cutting apparatus mounted in the manipulator and grasping and lifting the at least one cut portion of the upper portion using a first handling apparatus mounted in the manipulator; and dismantling a first fuel tube of cutting both ends of the fuel tube exposed after dismantling the first vessel using a second cutting apparatus mounted in the manipulator and grasping and lifting the cut fuel tube using a second handling apparatus.

The dismantling the first vessel and dismantling the first fuel tube may be performed repeatedly on a portion-by-portion basis of the upper portion of the calandria vessel.

After dismantling the first vessel and before dismantling the first fuel tube, the first cutting apparatus and the first handling apparatus may be separated from the manipulator, and the second cutting apparatus may be mounted in the manipulator.

The dismantling the lower portion may include: dismantling a second vessel of cutting a portion of the lower portion of the calandria vessel using the first cutting apparatus mounted in the manipulator and grasping and lifting the cut portion of the lower portion using the first handling apparatus mounted in the manipulator; dismantling a second fuel tube of cutting both ends of the fuel tube exposed after dismantling the second vessel using the second cutting apparatus mounted in the manipulator and grasping and lifting the cut fuel tube using the second handling apparatus; dismantling a third fuel tube of cutting both ends of a fuel tube disposed inside the remaining portion of the lower portion of the calandria vessel using the second cutting apparatus mounted in the manipulator and grasping and lifting the cut fuel tube using the second handling apparatus; and dismantling a third vessel of grasping and lifting the last remaining portion of the lower portion of the calandria vessel using the first handling apparatus mounted in the manipulator.

The dismantling the second vessel and dismantling the second fuel tube may be performed repeatedly on a portion-by-portion basis of the lower portion of the calandria vessel.

After dismantling the first fuel tube and before dismantling the second vessel, the second cutting apparatus may be separated from the manipulator and the first cutting apparatus and the first handling apparatus may be mounted in the manipulator.

In dismantling the first vessel and dismantling the second vessel, the calandria vessel may be cut by a thermal cutting method.

In dismantling the first fuel tube, dismantling the second fuel tube and dismantling the third fuel tube, the fuel tube may be cut by a mechanical cutting method.

According to an aspect of another exemplary embodiment, there is provided a dismantling apparatus for dismantling a calandria vessel underwater including: a manipulator installed in a concrete vault in which a calandria vessel is installed, a first cutting apparatus and a first handling apparatus may be mounted in the manipulator when the calandria vessel is dismantled, and a second cutting apparatus may be mounted in the manipulator when a fuel tube disposed in the calandria vessel is dismantled.

The manipulator may include: a main body installed on the concrete vault; a pair of extensions extending from the main body into an inside of the concrete vault and longitudinally adjustable; and a pair of mounting portions provided in each of the pair of extensions.

When dismantling the calandria vessel, a first cutting apparatus configured to cut the calandria vessel may be mounted in one of the pair of mounting portions, and a first handling apparatus configured to grasp and lift the cut calandria vessel may be mounted in a remaining other of the pair of mounting portions.

When the fuel tube is dismantled, a pair of second cutting apparatuses configured to cut the fuel tube may be mounted in each of the pair of mounting portions.

The pair of second cutting apparatuses may be spaced apart and parallel to each other to correspond to both ends of the fuel tube.

The dismantling apparatus may further include a second handling apparatus configured to grasp and lift a cut fuel tube.

According to one or more exemplary embodiments, it is possible to safely dismantle the calandria vessel and the fuel tube in the underwater environment while reducing radiation exposure to workers by using various apparatuses detachably mounted in the manipulator installed in the concrete vault. In particular, if the manipulator is installed before the RM-deck is opened, and once the RM-deck is opened, the calandria vessel and the fuel tube are dismantled in the underwater environment using the manipulator, and thus, the dismantlement is performed safely.

In addition, depending on a work process, appropriate apparatuses may be mounted in the manipulator, and the apparatuses are detachable, allowing for easy replacement with other apparatuses. This enables a single manipulator to easily perform various works. More specifically, when dismantling the calandria vessel, the first cutting apparatus and the first handling apparatus can be mounted in the manipulator, and when dismantling the fuel tube, the second cutting apparatus can be mounted in the manipulator.

### BRIEF DESCRIPTION OF THE DRAWINGS

The above and other will be more clearly understood from the following description of the exemplary embodiments with reference to the accompanying drawings, in which:
FIG. 1 is a flowchart illustrating a method for dismantling a calandria vessel underwater according to an exemplary embodiment;
FIG. 2 is a flowchart illustrating an upper portion dismantling step and a lower portion dismantling step in FIG. 1 in detail;
FIG. 3 is a view illustrating a state after a filling step in FIG. 1;
FIG. 4 is a view illustrating a state after an installing step and an opening step in FIG. 1;
FIGS. 5A to 5C are views illustrating a calandria vessel dismantled according to an upper portion dismantling step of FIG. 2;
FIGS. 6A to 6F are views illustrating a calandria vessel and a fuel tube dismantled according to a lower portion dismantling step of FIG. 2 in detail;
FIG. 7 is a view of a state in which a calandria vessel is cut using a first cutting apparatus;
FIG. 8 is a view of a state in which a calandria vessel is handled using a first handling apparatus;
FIG. 9 is a view illustrating an appearance in which a second cutting apparatus and a second handling apparatus are installed to dismantle a fuel tube channel;
FIG. 10 is a view illustrating a state in which both ends of a fuel tube are cut using a second cutting apparatus; and
FIG. 11 is a view illustrating a state in which a fuel tube is handled using a second handling apparatus.

### DETAILED DESCRIPTION

Various modifications and various embodiments will be described with reference to the accompanying drawings so that those skilled in the art can easily carry out the disclosure. It should be understood, however, that the various embodiments are not for limiting the scope of the disclosure to the specific embodiments, but they should be interpreted to include all modifications, equivalents or alternatives of the embodiments included within the spirit and scope disclosed herein.

The terms described below are for the purpose of describing specific embodiments only, and are not intended to limit the scope of the present disclosure. As used herein, the singular forms "a", "an" and "the" are intended to include the plural forms as well, unless the context clearly indicates otherwise. In the disclosure, terms such as "comprises", "includes", or "have/has" should be construed as designating that there are such features, integers, steps, operations, components, parts, and/or combinations thereof, and do not exclude the presence or possibility of adding of one or more of other features, integers, steps, operations, components, parts, and/or combinations thereof.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

It will be understood that, although the terms first, second, etc. may be used herein to describe various elements, these elements should not be limited by these terms. These terms are only used to distinguish one element from another. The terms, such as 'part' or 'module', etc., should be understood as a unit that performs at least one function or operation and that may be embodied as hardware, software, or a combination thereof. With respect to an element described as a "unit" or "module", two or more elements may be combined into a single element, or a single element may be divided into two or more elements according to the subdivided functions. Also, each element described below may additionally perform some or all of functions performed by other elements, in addition to its main functions, and some of the main functions of each element may be performed entirely by other components.

Hereinafter, a method for dismantling a calandria vessel underwater and an apparatus for dismantling the same according to exemplary embodiments will be described in detail with reference to the accompanying drawings.

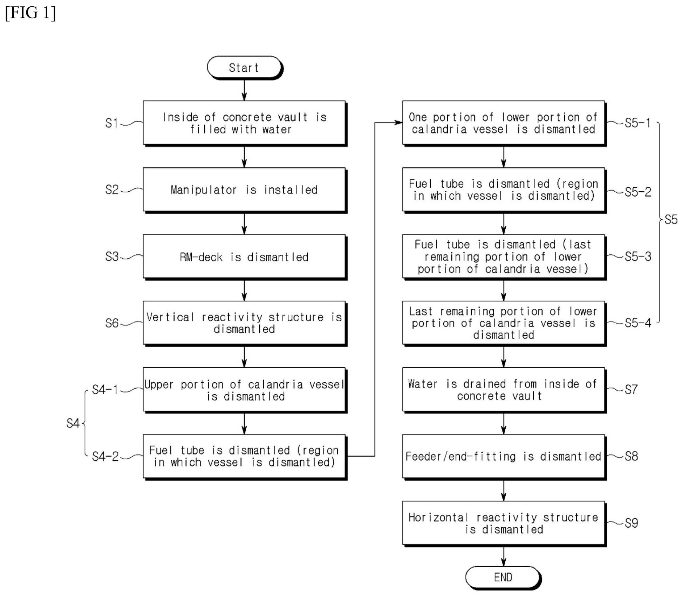

Referring to FIG. 1, a method for dismantling a calandria vessel underwater according to an exemplary embodiment includes a filling step (S1), an installing step (S2), an opening step (S3), an upper portion dismantling step (S4), and a lower portion dismantling step (S5).

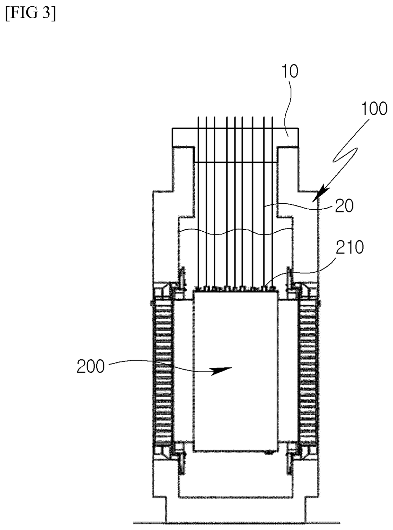

Referring to FIGS. 1 and 3, in the filling step (S1), an inside of a concrete vault 100 in which a calandria vessel 200 is installed is filled with water. FIG. 3shows a state after the filling step (S1), and it can be seen that the calandria vessel 200 is completely submerged. The concrete vault 100 is closed by an RM-deck (reactivity-mechanism deck) 10 which covers an upper portion.

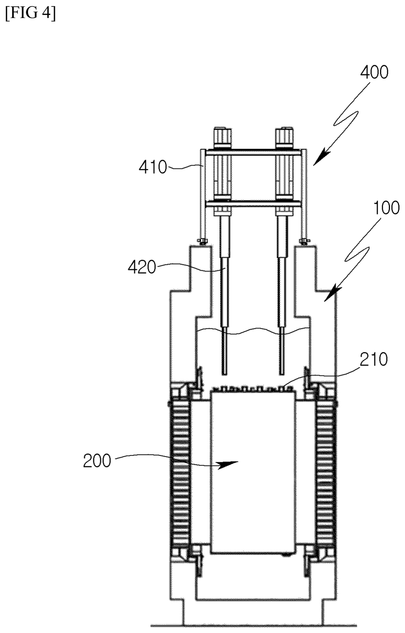

Referring to FIGS. 1 and 4, in the installing step (S2), a manipulator 400 is installed in the concrete vault 100. The manipulator 400 is installed in an upper portion of the concrete vault 100 and may extend to an inside of the concrete vault 100 after the opening step (S3).

In the opening step (S3), the concrete vault 100 is opened by dismantling the RM-deck 10. Therefore, the installation of the manipulator 400 is performed before opening the concrete vault 100, and the concrete vault 100 is opened after the inside of the concrete vault 100 is filled with water, radioactive contaminants inside the concrete vault 100 are not spread, thus reducing the radiation exposure of the workers.

After disassembling the RM-deck 10 in the opening step (S3), a vertical reactivity structure dismantling step (S6) may be further performed to dismantle a vertical reactivity structure, which includes a vertical reactivity controller 20 inserted into a protrusion lug 210 of the calandria vessel 200 and extending to the RM-deck 10.

FIG. 4 is a view illustrating a state after the installing step (S2), the opening step (S3), and the vertical reactivity structure dismantling step (S6).

Subsequently, dismantling of the calandria vessel 200 and the fuel tube 300 disposed inside the calandria vessel 200 is performed. First, the upper portion dismantling step (S4) is performed using the manipulator 400 to cut and dismantle the upper portion of the calandria vessel 200 and the fuel tube 300 disposed inside the upper portion of the calandria vessel 200.Then, the lower portion dismantling step (S5) is performed using the manipulator 400 to cut and dismantle the lower portion of the calandria vessel 200 and the fuel tube 300 disposed inside the lower portion of the calandria vessel 200.

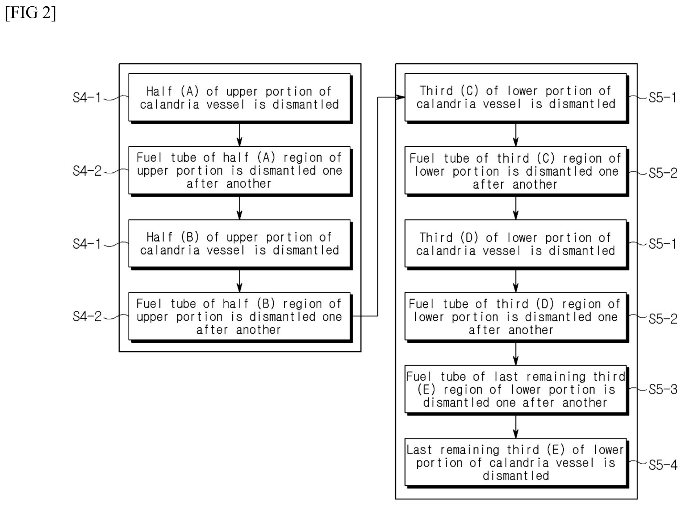

Referring to FIGS. 1 and 2, the upper portion dismantling step (S4) may include a first vessel dismantling step (S4-1) of cutting at least a portion of the upper portion of the calandria vessel 200 using a first cutting apparatus 500 mounted in the manipulator 400, and grasping and lifting the at least a cut portion of the upper portion using a first handling apparatus 600 mounted in the manipulator 400, and a first fuel tube dismantling step (S4-2) of cutting both ends of the fuel tube 300 exposed after performing the first vessel dismantling step (S4-1) using a second cutting apparatus 700 mounted in the manipulator 400, and grasping and lifting the cut fuel tube using a second handling apparatus 800.

In this case, if the entire fuel tube 300 of the upper portion is cut and dismantled, and then the entire upper portion of the calandria vessel 200 is cut and dismantled, the first vessel dismantling step (S4-1) and the first fuel tube dismantling step (S4-2) may be performed once at a time. However, in some cases, the first vessel dismantling step (S4-1) and the first fuel tube dismantling step (S4-2) may be repeatedly performed for each portion of the upper portion of the calandria vessel 200.

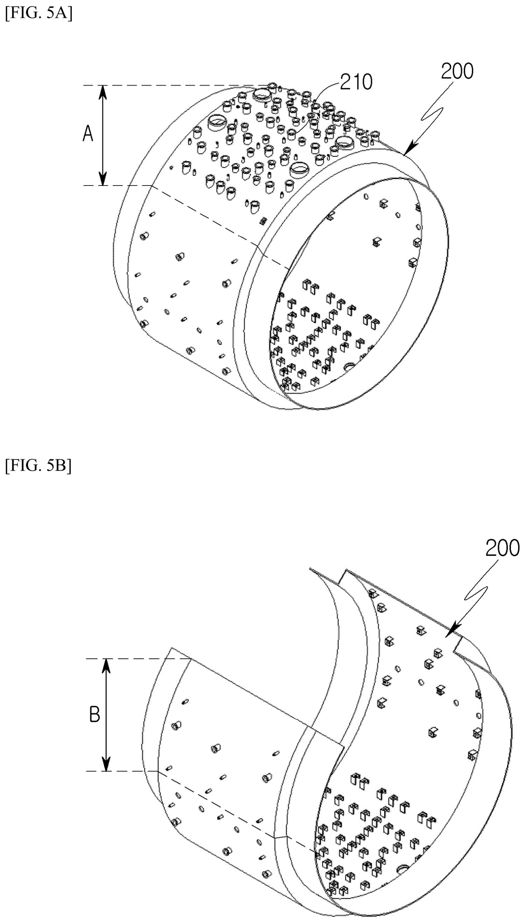

For example, the upper portion of the calandria vessel 200 is divided into two portions and dismantled half at a time. Therefore, as shown in FIG. 2, area A corresponding to half of the upper portion of the calandria vessel 200 is cut and dismantled, the exposed fuel tube 300 of area A is cut and dismantled. Then, area B corresponding to a remaining half of the upper portion of the calandria vessel 200 is cut and dismantled, and the exposed fuel tube 300 of area B is cut and dismantled. Here, area A corresponds to the upper half region from the uppermost part of the calandria vessel 200 in a height direction, as shown in FIG. 5A, and area B corresponds to the remaining upper half region in the height direction from a point at which the area A ends, as shown in FIG. 5B.

When dismantling the upper portion of the calandria vessel 200, because the fuel tube 300 is disposed inside the calandria vessel 200 and the calandria vessel 200 has a cylindrical shape, the fuel tube 300 cannot be dismantled without first dismantling the calandria vessel 200 due to interference.

In the first vessel dismantling step (S4-1), the first cutting apparatus 500 and the first handling apparatus 600 are mounted in the manipulator 400, and in the first fuel tube dismantling step (S4-2), the second cutting apparatus 700 is mounted in the manipulator 400. Therefore, after the first vessel dismantling step (S4-1) and before the first fuel tube dismantling step (S4-2), the first cutting apparatus 500 and the first handling apparatus 600 are separated from the manipulator 400, and the second cutting apparatus 700 may be mounted in the manipulator 400. Conversely, when proceeding from the first fuel tube dismantling step (S4-2) to the first vessel dismantling step (S4-1), the second cutting apparatus 700 may be separated from the manipulator 400, and the first cutting apparatus 500 and the first handling apparatus 600 may be mounted in the manipulator 400.

The lower portion dismantling step (S5) includes a second vessel dismantling step (S5-1) of cutting a portion of the lower portion of the calandria vessel 200 using the first cutting apparatus 500 mounted in the manipulator 400, and grasping and lifting the cut portion of the lower portion using the first handling apparatus 600 mounted in the manipulator 400, and a second fuel tube dismantling step (S5-2) of cutting both ends of the fuel tube 300 exposed after performing the second vessel dismantling step (S5-1) using the second cutting apparatus 700 mounted in the manipulator 400, and grasping and lifting the cut fuel tube using the second handling apparatus 800. The lower portion dismantling step (S5) further includes a third fuel tube dismantling step (S5-3) of cutting both ends of the fuel tube 300 disposed inside the remaining lower portion of the calandria vessel 200 using the second cutting apparatus 700 mounted in the manipulator 400, and grasping and lifting the cut fuel tube using the second handling apparatus 800, and a third vessel dismantling step (S5-4) of grasping and lifting the remaining lower portion of the calandria vessel 200 using the first handling apparatus 600 mounted in the manipulator 400.

When dismantling the lower portion of the calandria vessel 200, it is preferable to dismantle the calandria vessel 200 first and then dismantle the exposed fuel tube 300 to minimize interference with the calandria vessel 200. However, ultimately, the fuel tube 300 should be cut and before cutting the calandria vessel 200, because the last remaining portion of the lower portion cannot be dismantled without first removing the fuel tubes 300.

To this end, the lower portion of the calandria portion 200 may be dismantled at least half at a time. In this case, the second vessel dismantling step (S5-1), the second fuel tube dismantling step (S5-2), the third fuel tube dismantling step (S5-3) and the third vessel dismantling step (S5-4) may be performed once. However, in some cases, if the lower portion of the calandria vessel 200 is dismantled by one-third, one-quarter, or even smaller portions, the second vessel dismantling step (S5-1) and the second fuel tube dismantling step (S5-2) may be repeatedly performed for each portion of the lower portion of the calandria vessel 200. Even in this case, the third fuel tube dismantling step (S5-3) and the third vessel dismantling step (S5-4) may be performed once at the end.

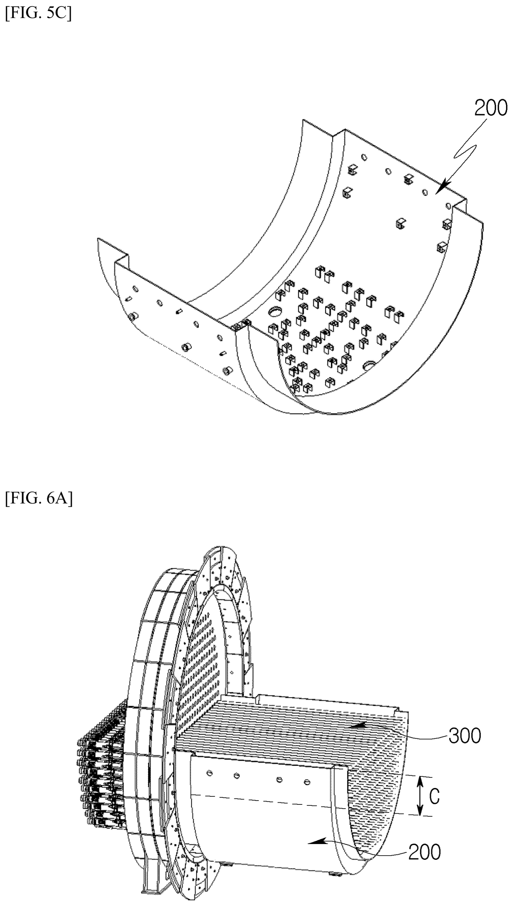

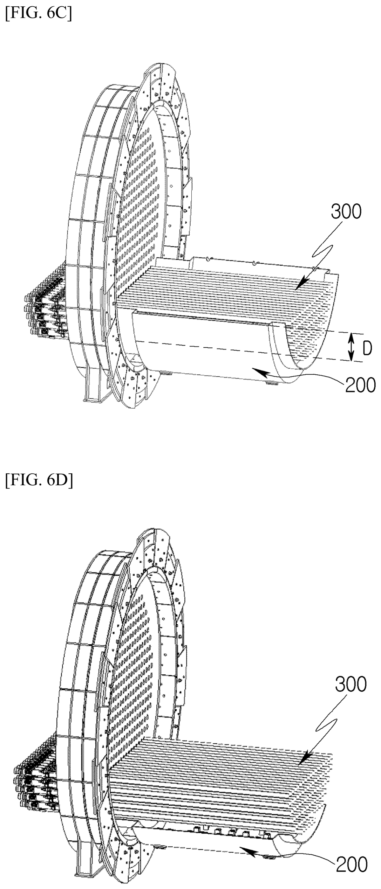

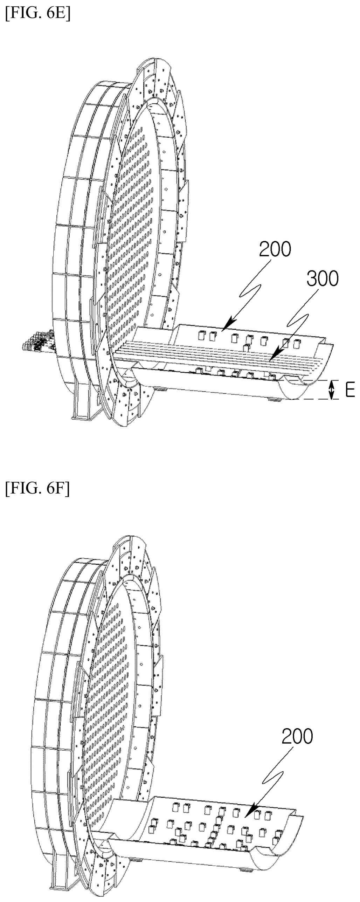

In this embodiment, the lower portion of the calandria vessel 200 is divided into three portions, and each portion is dismantled sequentially. Therefore, as shown in FIG. 2, C region corresponding to one-third of the lower portion of the calandria vessel 200 is cut and dismantled, and the exposed fuel tube 300 of the C region is cut and dismantled. Then, D region corresponding to one-third of the lower portion of the calandria vessel 200 is cut and dismantled, and the exposed fuel tube 300 of the D region is cut and dismantled. Thereafter, the fuel tube 300 disposed in E region corresponding to the remaining one-third of the lower portion of the calandria vessel 200 is cut and dismantled, and the remaining portion of the calandria vessel 200 in the E region is dismantled. Here, the C region corresponds to one-third of the lower portion in the height direction from a midpoint of the calandria vessel 200, as shown in FIG. 6A, the D region corresponds to one-third of the lower portion in the height direction from the end point of the C region, as shown in FIG. 6C, and the E region corresponds to the remaining one-third of the lower portion in the height direction from the end point of the D region, as shown in FIG. 6E.

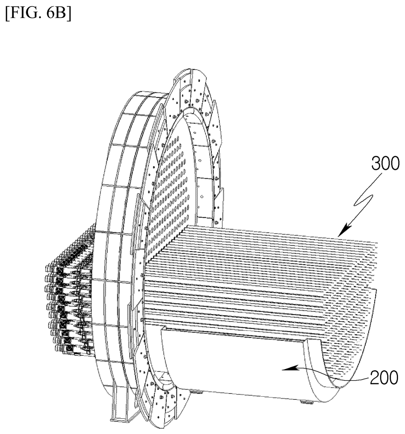

FIGS. 5C and 6A show a state in which the upper portion of the calandria vessel 200 is dismantled and the lower portion remains. In FIG. 6B shows a state in which the C region of the lower portion of the calandria vessel 200 is dismantled, FIG. 6C shows a state in which the fuel tube 300 of the C region is dismantled, FIG. 6D shows a state in which the D region of the lower portion of the calandria vessel 200 is dismantled, FIG. 6E shows a state in which the fuel tube 300 of the D region is dismantled, and FIG. 6F shows a state in which the fuel tube 300 of the E region is dismantled and only the lower E region of the calandria vessel 200 remains.

In the first to third fuel tube dismantling steps (S4-2, S5-2, and S5-3), the fuel tube 300 may be dismantled by cutting them one by on. Also, in the first and second vessel dismantling steps (S4-1 and S5-1), it is described that one region of the calandria vessel 200 to be dismantled is cut and dismantled at once, but in some cases, the calandria vessel 200 may be cut into multiple pieces and dismantled. As such, in the third vessel dismantling step (S5-4), it is described that the calandria vessel 200 is dismantled without cutting, but in some cases, the calandria vessel 200 may be cut into multiple pieces and dismantled.

In the first fuel tube dismantling step (S4-2), the second cutting apparatus 700 is mounted in the manipulator 400, and in the second vessel dismantling step (S5-1), the first cutting apparatus 500 and the first handling apparatus 600 are mounted in the manipulator 400. Therefore, after the first fuel tube dismantling step (S4-2) and before the second vessel dismantling step (S5-1), the second cutting apparatus 700 may be separated from the manipulator 400, and the first cutting apparatus 500 and the first handling apparatus 600 may be mounted in the manipulator 400.

Further, when proceeding from the second vessel dismantling step (S5-1) to the second fuel tube dismantling step (S5-2), the first cutting apparatus 500 and the first handling apparatus 600 may be separated from the manipulator 400, and the second cutting apparatus 700 may be mounted. Conversely, when proceeding from the second fuel tube dismantling step (S5-2) to the second vessel dismantling step (S5-1), the second cutting apparatus 700 may be separated from the manipulator 400, and the first cutting apparatus 500 and the first handling apparatus 600 may be mounted.

In the first vessel dismantling step (S4-1) and the second vessel dismantling step (S5-1), the calandria vessel 200 may be cut by a thermal cutting method, such as a laser cutting method. Because the calandria vessel 200 is made of stainless steel, the thermal cutting method may be applied, and a non-contact cutting method may be applied because the work has to be performed to a depth of 15m from the RM-deck 10.

In addition, in the first fuel tube dismantling step (S4-2), the second fuel tube dismantling step (S5-2), and the third fuel tube dismantling step (S5-3), the fuel tube 300 may be cut by a mechanical cutting method. Because the fuel tube 300 is formed of a zirconium alloy and a brittleness thereof increases due to neutron irradiation, the mechanical cutting method capable of operating at a low speed may be applied to cut the fuel tube 300. While the fuel tube 300 may also be cut using the laser, considering the spatial constraints and the difficulty of underwater cutting due to the fuel tube 300 being a dual tube including the calandria tube and a pressure tube positioned inside the calandria tube, the mechanical cutting method is preferable.

Referring again to FIG. 1, after the lower portion dismantling step (S5), a draining step (S7) of draining the water inside the concrete vault 100 is performed. Thereafter, steps may be performed to dismantle other structures within the concrete vault 100, such as a feeder/end-fitting dismantling step (S8) of dismantling a feeder and an end-fitting, and a horizontal reactivity structure dismantling step (S9) of dismantling a horizontal reactivity structure.

Referring to FIGS. 4 and 7 to 11, a method for dismantling the calandria vessel 200 and the fuel tube 300 using a dismantling apparatus for dismantling the calandria vessel underwater according to an exemplary embodiment will be described in detail.

The dismantling apparatus for dismantling the calandria vessel underwater includes the manipulator 400 installed in the concrete vault 100. When dismantling the calandria vessel 200, the first cutting apparatus 500 and the first handling apparatus 600 are mounted in the manipulator 400, and when dismantling the fuel tube 300, the second cutting apparatus 700 is mounted in the manipulator 400.

More specifically, the manipulator 400 may include a main body 410 installed on the concrete vault 100, a pair of longitudinally adjustable extensions 420 extending from the main body 410 into an inside of the concrete vault 100, and a pair of mounting portions 430 provided in each of the pair of extensions 420.

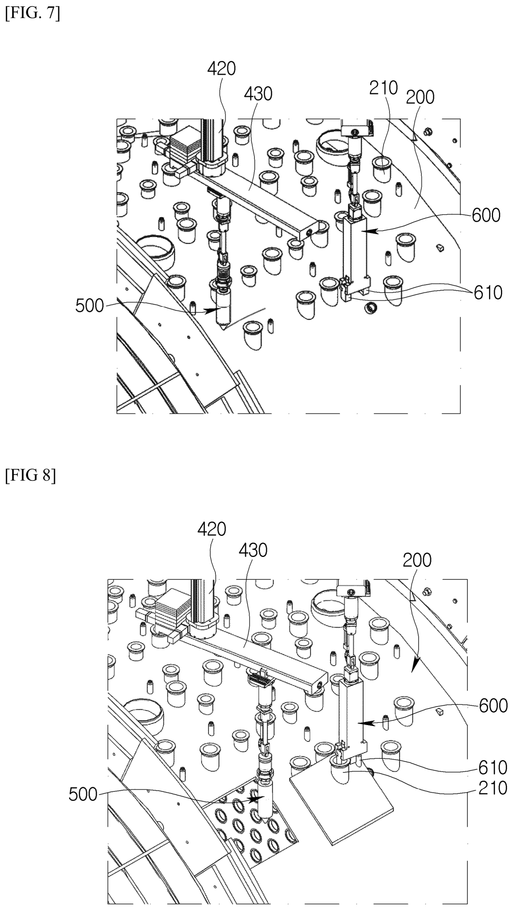

Referring to FIGS. 7 and 8, when dismantling the calandria vessel 200, the first cutting apparatus 500 for cutting the calandria vessel 200 may be mounted in one of the pair of mounting portions 430, and the first handling apparatus 600 for grasping and lifting the cut calandria vessel 200 may be mounted in the other of the pair of mounting portions 430. The first cutting apparatus 500 and the first handling apparatus 600 may be detachably mounted in the pair of mounting portions 430.

Accordingly, as shown in FIG. 7, in the first vessel dismantling step (S4-1) and the second vessel dismantling step (S5-1), the calandria vessel 200 may be cut using the first cutting apparatus 500. In this embodiment, the first cutting apparatus 50 is a laser cutting apparatus. The calandria vessel 200 may be cut according to a designed cutting plan using the first cutting apparatus 500.

Further, as shown in FIG. 8, in the first vessel dismantling step (S4-1) and the second vessel dismantling step (S5-1), the cut calandria vessel 200 may be grasped and lifted using the first handling apparatus 600. In this embodiment, the first handling apparatus 600 is a gripper with two parallel linear fingers 610 that may be inserted into the protrusion lug 210, into which the vertical reactivity controller 20 is inserted. This allows one of the two linear fingers 610 to be inserted into the inside of the protrusion lug 210, while the other moves in parallel to support the protrusion lug 210 from the outside, thereby stably grasping and lifting the calandria vessel 200.

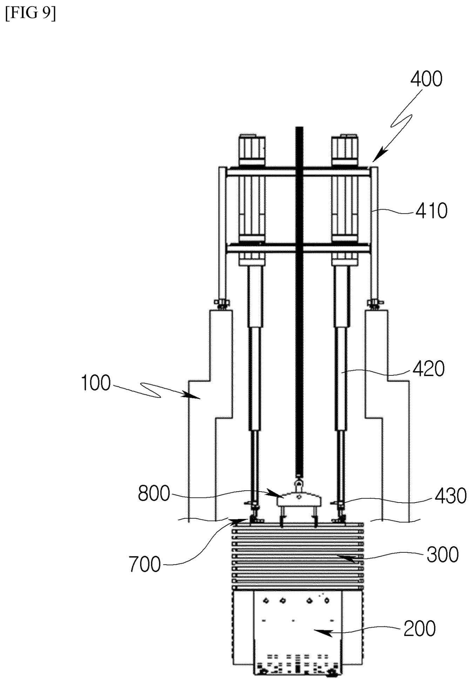

Referring to FIGS. 9 to 11, when dismantling the fuel tube 300, a pair of second cutting apparatuses 700 for cutting the fuel tube 300 are mounted in the pair of mounting portions 430. The dismantling apparatus for dismantling the calandria vessel underwater may further include the second handling apparatus 800 for grasping and lifting the cut fuel tube 300. In this embodiment, the second handling apparatus 800 is not mounted in the pair of mounting portions 430, but is installed in a separate structure so as to be adjustable in the longitudinal direction. However, the disclosed technology is not limited thereto, and in some cases, the second handling apparatus 800 may be installed in the manipulator 400. The second cutting apparatus 700 may be detachably mounted in the pair of mounting portions 430.

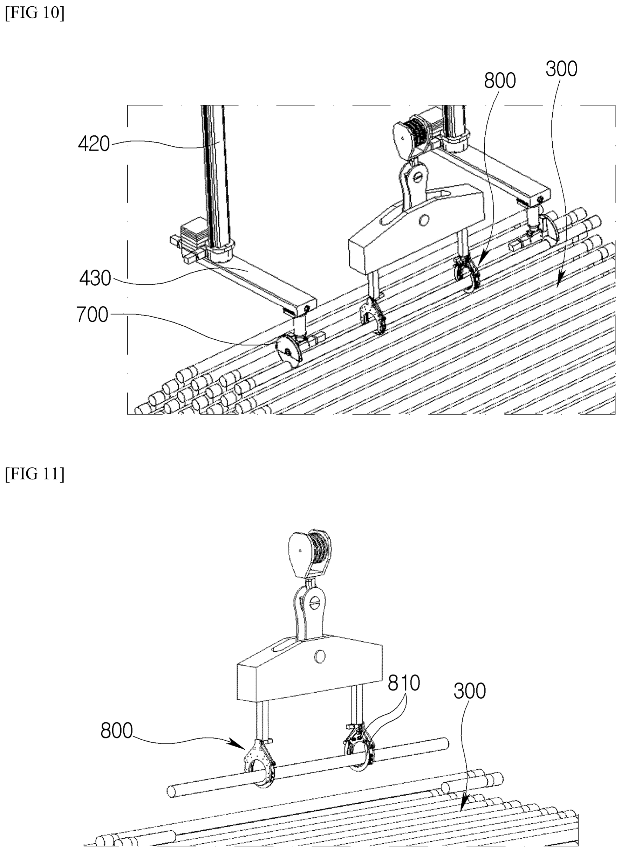

Accordingly, as shown in FIG. 10, in the first fuel tube dismantling step (S4-2), the second fuel tube dismantling step (S5-2), and the third fuel tube dismantling step (S5-3), both ends of the fuel tube 300 may be cut using the second cutting apparatus 700. In this case, the second cutting apparatus 700 is a diamond wheel saw. The pair of second cutting apparatuses 700 are disposed to be spaced apart from each other to correspond to each end of the fuel tube 300, thus allowing the pair of second cutting apparatuses 700 to cut the both ends of the fuel tube 300.

In addition, as shown in FIG. 11, in the first fuel tube dismantling step (S4-2), the second fuel tube dismantling step (S5-2) and the third fuel tube dismantling step (S5-3), the cut fuel tube 300 may be grasped and lifted using the second handling apparatus 800. In this embodiment, the second handling apparatus 800 may be a gripper with two curved fingers 810 at both ends, which may be adjustable in angle to hold the fuel tube 300. Accordingly, as the two curved fingers 810 completely hold the cut fuel tube 300 at two positions, the fuel tube 300 may be stably grasped and lifted.

While one or more exemplary embodiments have been described with reference to the accompanying drawings, it will be apparent to those skilled in the art that various variations and modifications may be made by adding, changing, or removing components without departing from the spirit and scope of the disclosure as defined in the appended claims, and these variations and modifications fall within the spirit and scope of the disclosure as defined in the appended claims. Therefore, the description of the exemplary embodiments should be construed in a descriptive sense and not to limit the scope of the claims, and many alternatives, modifications, and variations will be apparent to those skilled in the art.

## Claims

1. A method for dismantling a calandria vessel underwater, the method comprising:
filling an inside of a concrete vault in which a calandria vessel is installed with water;
installing a manipulator in the concrete vault;
opening the concrete vault by dismantling an RM-deck (reactivity-mechanism deck);
dismantling an upper portion to cut and dismantle an upper portion of the calandria vessel and a fuel tube disposed inside the upper portion of the calandria vessel using the manipulator; and
dismantling a lower portion to cut and dismantle a lower portion of the calandria vessel and a fuel tube disposed inside the lower portion of the calandria vessel using the manipulator.

2. The method for dismantling the calandria vessel underwater of claim 1,
wherein the dismantling the upper portion comprises:
dismantling a first vessel of cutting at least one portion of the upper portion of the calandria vessel using a first cutting apparatus mounted in the manipulator and grasping and lifting the at least one cut portion of the upper portion using a first handling apparatus mounted in the manipulator; and
dismantling a first fuel tube of cutting both ends of the fuel tube exposed after dismantling the first vessel using a second cutting apparatus mounted in the manipulator, and grasping and lifting the cut fuel tube using a second handling apparatus.

3. The method for dismantling the calandria vessel underwater of claim 2,
wherein dismantling the first vessel and dismantling the first fuel tube are performed repeatedly on a portion-by-portion basis of the upper portion of the calandria vessel.

4. The method for dismantling the calandria vessel underwater of claim 2,
wherein after dismantling the first vessel and before dismantling the first fuel tube, the first cutting apparatus and the first handling apparatus are separated from the manipulator, and the second cutting apparatus is mounted in the manipulator.

5. The method for dismantling the calandria vessel underwater of claim 2,
wherein the dismantling the lower portion comprises:
dismantling a second vessel of cutting a portion of the lower portion of the calandria vessel using the first cutting apparatus mounted in the manipulator and grasping and lifting the cut portion of the lower portion using the first handling apparatus mounted in the manipulator;
dismantling a second fuel tube of cutting both ends of the fuel tube exposed after dismantling the second vessel using the second cutting apparatus mounted in the manipulator, and grasping and lifting the cut fuel tube using the second handling apparatus;
dismantling a third fuel tube of cutting both ends of a fuel tube disposed inside the remaining portion of the lower portion of the calandria vessel using the second cutting apparatus mounted in the manipulator and grasping and lifting the cut fuel tube using the second handling apparatus; and
dismantling a third vessel of grasping and lifting the last remaining portion of the lower portion of the calandria vessel using the first handling apparatus mounted in the manipulator.

6. The method for dismantling the calandria vessel underwater of claim 5,
wherein dismantling the second vessel and dismantling the second fuel tube are performed repeatedly on a portion-by-portion basis of the lower portion of the calandria vessel.

7. The method for dismantling the calandria vessel underwater of claim 5,
wherein after dismantling the first fuel tube and before dismantling the second vessel, the second cutting apparatus is separated from the manipulator, and the first cutting apparatus and the first handling apparatus are mounted in the manipulator.

8. The method for dismantling the calandria vessel underwater of claim 5,
wherein in dismantling the first vessel and dismantling the second vessel, the calandria vessel is cut by a thermal cutting method.

9. The method for dismantling the calandria vessel underwater of claim 8,
wherein in dismantling the first fuel tube, dismantling the second fuel tube and dismantling the third fuel tube, the fuel tube is cut by a mechanical cutting method.

10. A dismantling apparatus for dismantling a calandria vessel underwater comprising:
a manipulator installed in a concrete vault in which a calandria vessel is installed,
wherein when the calandria vessel is dismantled, a first cutting apparatus and a first handling apparatus are mounted in the manipulator, and
wherein when a fuel tube disposed in the calandria vessel is dismantled, a second cutting apparatus is mounted in the manipulator.

11. The dismantling apparatus of claim 10,
wherein the manipulator comprises:
a main body installed on the concrete vault;
a pair of extensions extending from the main body into an inside of the concrete vault and longitudinally adjustable; and
a pair of mounting portions provided in each of the pair of extensions.

12. The dismantling apparatus of claim 11,
wherein when dismantling the calandria vessel, a first cutting apparatus configured to cut the calandria vessel is mounted in one of the pair of mounting portions, and a first handling apparatus configured to grasp and lift the cut calandria vessel is mounted in a remaining other of the pair of mounting portions.

13. The dismantling apparatus of claim 11,
wherein when the fuel tube is dismantled, a pair of second cutting apparatuses configured to cut the fuel tube is mounted in each of the pair of mounting portions.

14. The dismantling apparatus of claim 13,
wherein the pair of second cutting apparatuses are spaced apart and parallel to each other to correspond to both ends of the fuel tube.

15. The dismantling apparatus of claim 13, further comprising:
a second handling apparatus configured to grasp and lift a cut fuel tube.
